# EUROPÄISCHE PATENTSCHRIFT

(11) **EP 2 935 497 B1**
(45) Veröffentlichungstag und Bekanntmachung des Hinweises auf die Patenterteilung: **04.08.2021**
(21) Anmeldenummer: 13811515.9
(22) Anmeldetag: 19.12.2013
(51) Int. Cl.: C09J 5/00, C09J 5/06, B32B 15/08, B32B 17/06

(54) **GEGENSTAND MIT SCHALTBARER ADHÄSION**
OBJECT WITH SELECTABLE ADHESION
OBJET DOTÉ D'UNE ADHÉRENCE VARIABLE

(30) Priorität: 21.12.2012 DE 102012112965
(43) Veröffentlichungstag der Anmeldung: 28.10.2015
(73) Patentinhaber: Leibniz-Institut für Neue Materialien gemeinnützige GmbH, 66123 Saarbrücken (DE)
(72) Erfinder: SCHNEIDER, Andreas Simon, 66787 Wadgassen (DE); KRONER, Elmar, 71272 Renningen (DE); KAISER, Jessica, 67310 Hettenleidelheim (DE); FRENSEMEIER, Mareike, 9470 Buchs SG (CH); ARZT, Eduard, 66123 Saarbrücken (DE)
(74) Vertreter: Patentanwälte Gierlich & Pischitzis Partnerschaft mbB
(86) Internationale Anmeldenummer: PCT/EP2013/077324
(87) Internationale Veröffentlichungsnummer: WO 2014/096158

(56) Entgegenhaltungen:
- US-A1- 2008 202 637
- US-A1- 2011 300 358
- US-B1- 6 773 535
- Anonymous: "Ceiling temperature", Wikipedia - The free Encyclopedia, 22 October 2017 (2017-10-22), pages 1-2, XP055434663, Retrieved from the Internet: URL:https://en.wikipedia.org/wiki/Ceiling_ temperature [retrieved on 2017-12-13]

## Beschreibung

### Gebiet der Erfindung

Die vorliegende Erfindung betrifft einen Gegenstand mit mindestens einer Oberfläche mit schaltbarer Trockenadhäsion.

### Stand der Technik

Die Verbindung verschiedener Oberflächen durch Adhäsion spielt zur Bildung von Materialverbünden eine große Rolle. Ein Problem dabei ist, dass die Verbindungen oft nur schwierig wieder gelöst werden können. Dies ist oft mit der Auflösung oder Zerstörung der Haftschicht verbunden.

Eine andere Möglichkeit ist die Verbindung von Oberflächen über ihre Trockenadhäsivität. Unter Trockenadhäsivität wird im Rahmen dieser Schrift die Ausbildung von adhäsiven Kräften zwischen Oberflächen ohne haftvermittelnde Stoffe, wie Klebstoffe, verstanden. Solche Haftverbindungen zeichnen sich auch dadurch aus, dass sie sich ohne Rückstände wieder entfernen lassen.

Solche Haftsysteme basieren häufig auf einer Strukturierung der Oberfläche. Dabei muss allerdings zwischen Systemen unterschieden werden, welche eine spezielle Gegenstruktur erfordern, wie z.B. Haken und Ösen, und Systemen, welche mit beliebigen Oberflächen Adhäsionskräfte ausbilden können.

Solche Haftsysteme sind beispielsweise auch aus der Natur, z.B. bei Gecko- oder Insekten-Beinen, bekannt. Man nimmt an, dass bei solchen Systemen die Haftkräfte auf van-der-Waals-Kräften basieren. Die Strukturierung der Oberfläche führt bei diesen Systemen bei Kontaktierung zu einer sehr starken Vergrößerung der Kontaktfläche, und damit auch der Stärke der bei der Kontaktierung ausgebildeten Adhäsionskräfte.

Bei der Trockenadhäsivität hängt die Stärke der Adhäsion zwischen zwei Oberflächen mit der für die Adhäsion verfügbaren Fläche zusammen. Daher haften zwei planare Oberflächen deutlich besser aneinander, als eine planare und eine raue oder nicht planare Oberfläche. Allgemein gilt, je größer die zur Adhäsion verfügbare Fläche ist, desto besser haften zwei Oberflächen aneinander.

Allerdings ist diese Fläche in der Regel nicht veränderbar, so dass die Adhäsionskraft einer Oberfläche in der Regel nicht veränderbar ist.

Aus dem Stand der Technik sind allerdings Materialien bekannt, welche in Abhängigkeit von äußeren Einflüssen unterschiedliche Formen annehmen können. Als solche Materialien sind insbesondere Formgedächtnislegierungen (shape memory alloys, SMAs) bekannt.

Formgedächtnislegierungen können ohne Änderung ihrer Zusammensetzung eine Änderung ihrer Kristallstruktur erfahren, wobei diese Änderung der Kristallstruktur thermisch oder mechanisch ausgelöst werden kann. Meistens wird die Änderung thermisch ausgelöst, d.h. die Formgedächtnislegierung ändert ihre Struktur bei Erreichen einer bestimmten Temperatur.

Üblicherweise wird die Hochtemperaturphase einer Formgedächtnislegierung als Austenitphase und die Niedertemperaturphase als Martensitphase bezeichnet. Die besonderen Eigenschaften der Formgedächtnislegierungen beruhen darauf, dass beide Phasen auch reversibel ineinander umgewandelt werden können.

Dabei werden zwei unterschiedliche Möglichkeiten unterschieden. Wenn ein Austenitgegenstand in einer bestimmten Form unterhalb der Umwandlungstemperatur abgekühlt wird, wandelt er sich in einen Martensitgegenstand der gleichen Form um. Danach wird dieser Gegenstand nun in eine zweite Form überführt, wobei die kritische Dehnung von Martensit (in Abhängigkeit von der verwendeten Legierung, meistens etwa 5-7 %) nicht überschritten wird. Wenn dieser Gegenstand über die Umwandlungstemperatur erwärmt wird, so wandelt er sich wieder in Austenit um und nimmt dabei wieder die ursprüngliche erste Form an. Dieser Prozess kann auch mehrfach wiederholt werden. Allerdings wandelt sich der erhaltene Austenitgegenstand beim Abkühlen unter die Umwandlungstemperatur ohne erneute Verformung nicht in die zweite Form um. Diese kann nur durch erneute Verformung des Gegenstandes erhalten werden. Daher wird dieser Effekt auch als "Einweg-Formgedächtniseffekt" bezeichnet.

Ein anderes Verhalten kann erreicht werden, wenn das Formgedächtnismaterial plastisch verformt oder thermomechanisch behandelt wird. Beide Vorgänge rufen im Material eine Gefügestruktur hervor, die dazu führt, dass sowohl ein Gedächtnis für die Form des Austenitsgegenstands als auch für die des Martensitgegenstands vorliegt. Dadurch kann auch beim Abkühlen und der Umwandlung von Austenit zu Martensit eine Formänderung der Strukturen an der Oberfläche hervorgerufen werden. Dieser Vorgang ist reversibel, so dass durch Erwärmen und Abkühlen zwischen diesen beiden Formen gewechselt werden kann. Dieser Effekt wird auch als "Zweiweg-Formgedächtniseffekt" bezeichnet.

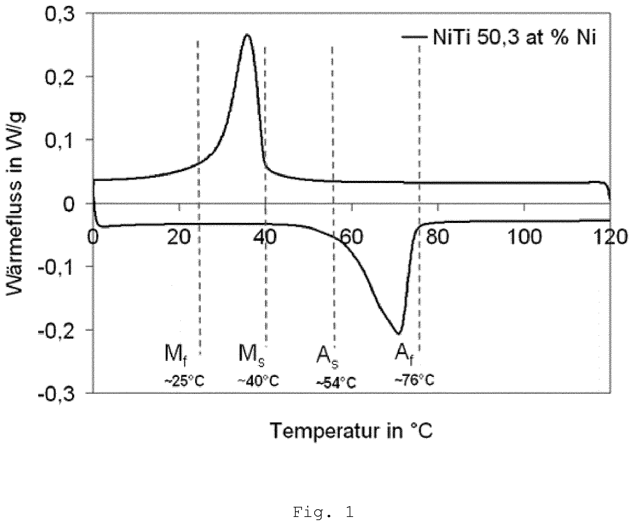

Dabei ist zu beachten, dass die Umwandlung von Martensit zu Austenit nicht bei der gleichen Temperatur, wie die Umwandlung von Austenit zu Martensit stattfinden muss. Üblicherweise tritt eine deutliche Hysterese auf. Außerdem findet die Umwandlung in einem Temperaturbereich statt. Die Umwandlungstemperaturen werden als Martensit-Anfangstemperatur (Mₛ) und Martensit-Endtemperatur (M_{f}), sowie Austenit-Anfangstemperatur (Aₛ) und Austenit-Endtemperatur (A_{f}) bezeichnet. Dabei bezeichnen die Großbuchstaben das jeweilige Umwandlungsprodukt. Dies bedeutet, wenn Austenit abgekühlt wird, stellt Mₛ die Temperatur dar, bei der er beginnen wird, sich in Martensit umzuwandeln. Ein entsprechendes Diagramm zeigt Figur 1. Daher gilt üblicherweise der Zusammenhang M_{f}<Mₛ<Aₛ<A_{f}. Die Temperaturen können variieren, wenn die Formgedächtnislegierung unter einer Spannung steht. Dies kann die Umwandlungstemperaturen erhöhen oder erniedrigen.

Eine besondere Variante dieses reversiblen Effekts zeigt DE 10 2010 034 954 A1, wo die reversible Bildung von Anhebungen auf einer Oberfläche zum Speichern von Informationen gezeigt wird.

Auch ist die Verwendung von Formgedächtnislegierungen für Klebeverbindungen bekannt (z. B. US 6,773,535). Allerdings wird dabei die Verformung eines Bauteils aus Formgedächtnislegierung zur Schwächung der Klebeverbindung genutzt.

US 2011/0300358 A1 verwendet eine Formgedächtnislegierung in einem Komposit aus Kohlefaserplatten zum temperaturabhängigen Verbiegen.

US 2008/0202637 A1 beschreibt eine Oberflächenstrukturierung einer Formgedächtnislegierung, um die Bindung zwischen einem Polymer und der Legierung zu verbessern.

Die Herstellung von schaltbaren Oberflächenstrukturen im Mikrometerbereich ist erst seit kurzem bekannt. So beschreibt DE 10 2010 034 954 A1 die Herstellung von reversibel schaltbaren Vertiefungen oder Anhebungen. Diese werden zur Speicherung von Informationen auf den Oberflächen genutzt, welche bei Erwärmung erscheinen sollen.

Eine Nutzung zur schaltbaren Adhäsion von Oberflächen durch Formgedächtnislegierungen ist nicht bekannt.

Aufgabe Aufgabe der Erfindung ist es, einen Gegenstand bereitzustellen, welcher eine schaltbare Trockenadhäsion aufweist.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht.

Die Aufgabe wird durch einen Gegenstand mit mindestens einer Oberfläche mit schaltbarer Trockenadhäsion, wobei diese Oberfläche mindestens eine Formgedächtnislegierung umfasst, welche mindestens teilweise mit mindestens einem Elastomer beschichtet ist, dadurch gekennzeichnet, dass die mindestens eine Formgedächtnislegierung eine Oberflächenstruktur ausbilden kann, welche die zur Trockenadhäsion verfügbare Fläche der Oberfläche verändert, wobei die Oberflächenstruktur durch Anhebungen oder Absenkungen gebildet wird, dadurch gekennzeichnet, dass die reversible Oberflächenstruktur eine Mikrostruktur ist, welche in Bezug auf ihre Ausdehnung parallel zur Oberfläche des Gegenstands mindestens eine Dimension von unter 500 µm aufweist, und eine Oberflächenstruktur mit einer Höhe von mehr als 0,5 µm ausgebildet wird, und die Beschichtung aus mindestens einem Elastomer an ihrer dicksten Stelle eine Dicke von unter 15 µm aufweist, gelöst.

Durch die Ausbildung der Oberflächenstruktur verändert sich die Oberfläche des Gegenstandes. Dadurch verändert sich die zur Adhäsion verfügbare Fläche der Oberfläche.

Bei der Adhäsion handelt es sich um Trockenadhäsivität der Oberfläche. Es werden keine Klebemittel verwendet.

Bei der mindestens einen Formgedächtnislegierung (SMA) handelt es sich um eine Nickel-Titan-Formgedächtnislegierung welche für das Ausbilden einer Oberflächenstruktur geeignet ist.

Dabei sind inzwischen Legierungen für einen großen Temperaturbereich bekannt. So sind Legierungen mit Umwandlungstemperaturen zwischen -200 bis 200 °C bekannt. Üblicherweise liegt die Umwandlungstemperatur zwischen 20 °C und 100 °C.

Die Formgedächtnislegierung kann auch ferromagnetisch sein. Über das Verhältnis von Nickel zu Titan kann dabei die Umwandlungstemperatur erhöht oder verringert werden. Für eine äquimolare NiTi-Formgedächtnislegierung (+/- 1 mol-% Abweichung von 1:1) beträgt die Temperatur, bei der eine Umwandlung von Austenit zu Martensit stattfindet etwa 35 °C (Mₛ 40 °C; M_{f} 25 °C; Aₛ 54 °C; A_{f} 76 °C).

Die Formgedächtnislegierung ist mindestens teilweise mit Elastomere beschichtet. Eine Formgedächtnislegierung hat in der Regel eine schlechte Adhäsionsfähigkeit. Dies bedeutet, dass ohne eine Polymerbeschichtung nur eine unzureichende Adhäsion zu einer anderen Oberfläche (Gegenfläche) erreicht werden kann. Durch das Aufbringen eines geeigneten Polymers kann dies deutlich verbessert werden. Bei Adhäsion muss dabei mindestens ein Teil der Polymerbeschichtung in Kontakt zur Gegenfläche kommen.

Die Verwendung einer Polymerschicht hat auch den Vorteil, dass auf einfache Weise die Adhäsionskraft für eine bestimmte Testoberfläche bzw. Prüfkörper gefunden werden kann. Bei vorgegebener Oberflächenstruktur kann das Adhäsionsverhalten von Polymeren an eine Gegenfläche angepasst werden. So können auf einfache Weise viele Polymere untersucht werden.

Die Polymere sind bevorzugt ausreichend elastisch, dass sie die Oberflächenstruktur der Formgedächtnislegierung an die Oberfläche der Beschichtung weitergeben können. Die Ausbildung der Oberflächenstruktur darf die Polymerbeschichtung nicht beschädigen. Auch darf sich die Struktur der Beschichtung bei den verwendeten Temperaturen verändern.

Das Polymer weist bevorzugt einen Elastizitätsmodul von kleiner als 100 MPa, besonders bevorzugt von kleiner als 10 MPa auf.

Bevorzugt liegt die Glasübergangstemperatur des Polymers unterhalb der Umwandlungstemperatur der Formgedächtnislegierung, bevorzugt unterhalb von M_{f}. Die Zersetzungstemperatur des Polymers muss oberhalb von A_{f} liegen.

Geeignet sind dabei alle Polymere, welche zu der gewünschten Gegenfläche eine Adhäsion aufweisen und so als Haftvermittler für Trockenadhäsivität agieren können.

Das mindestens eine Polymer ist ein Elastomer insbesondere Kautschuke oder kautschukähnliche Verbindungen. Eine Übersicht über geeignete Polymere gibt die folgende Liste. Die Kurzbezeichnungen sind nach DIN/ISO-Norm 1629 aufgeführt.

### M-Gruppe

Zur M-Gruppe gehören Kautschuke mit einer gesättigten Kette vom Polymethylentyp.

ACM Copolymere aus Ethylacrylat oder anderen Acrylaten mit einem geringen Anteil eines Monomers, welcher die Vulkanisation erleichtert.

AEM Ethylen-Acrylat-Kautschuk.

ANM Copolymere aus Ethylacrylat oder anderen Acrylaten und Acrylnitril.

CM chloriertes Polyethylen.

CSM chlorsulfoniertes Polyethylen.

EPDM Terpolymere aus Ethylen, Propylen und einem Dien mit einem ungesättigten Teil des Diens in der Seitenkette.

EPM Ethylen-Propylen-Copolymerisate.

FPM Kautschuke mit Fluor-, Fluoralkyl- oder Fluoralkoxygruppen an der Polymerkette.

### O-Gruppe

Zu dieser Gruppe gehören Kautschuke mit Sauerstoff in der Polymerkette.

CO Polychlormethyloxiran (Epichlorhydrin-Kautschuke).

ECO Copolymere aus Ethylenoxid (Oxiran) und Chlormethyloxiran (Epichlorhydrin).

GPO Copolymere aus Propylenoxid und Allylglycidether.

### R-Gruppe

Die R-Gruppe ist dadurch gekennzeichnet, dass vor dem Buchstaben "R" (= rubber) ein oder mehrere Kurzzeichen für das oder die Monomere(n) eingefügt wird (werden), aus dem (denen) der Kautschuk hergestellt wurde. Der unmittelbar vor dem "R" stehende Buchstabe kennzeichnet das Diolefin, aus dem der Kautschuk hergestellt wurde. Ein Buchstabe (oder mehrere Buchstaben) vor dem Diolefin-Buchstaben kennzeichnen das oder die Comonomer(e).Für die R-Gruppe wird folgende Einteilung verwendet:
ABR Acrylat-Butadien-Kautschuke.
BR Butadien-Kautschuke.
CR Chloropren-Kautschuke.
IIR Isobuten-Isopren-Kautschuke.
IR Isopren-Kautschuke, synthetisch.
NBR Acrylnitril-Butadien-Kautschuke.
NCR Acrylnitril-Chloropren-Kautschuke.
NR Isopren-Kautschuke (Naturkautschuke).
PBR Vinylpyridin-Butadien-Kautschuke.
SBR Styrol-Butadien-Kautschuke.
SCR Styrol-Chloropren-Kautschuke.
SIR Styrol-Isopren-Kautschuke.
NIR Acrylnitril-Isopren-Kautschuke.
PSBR Vinylpyridin-Styrol-Butadien-Kautschuke.

Carboxylgruppenhaltige Kautschuke werden durch den vorgestellten Buchstaben "X" gekennzeichnet:
XSBR carboxylgruppenhaltige Styrol-Butadien-Kautschuke.
XNBR carboxylgruppenhaltige.
Acrylnitril-Butadien-Kautschuke.

Kautschuke mit Halogen an der Polymerkette werden wie folgt eingeteilt:
BIIR Brom-Isobuten-Isopren-Kautschuke.
CIIR Chlor-Isopren-Kautschuke.

### Q-Gruppe

Die Q-Gruppe wird dadurch gekennzeichnet, dass der Name der Substituten an der Polymerkette vor die Silikon-Bezeichnung gesetzt wird.

MFQ Silikonkautschuke mit Methyl- und Fluor-Gruppen an der Polymerkette.

MPQ Silikonkautschuke mit Methyl- und Phenyl-Gruppen an der Polymerkette.

MPVQ Silikonkautschuke mit Methyl-, Phenyl- und VinylGruppen an der Polymerkette.

MNQ Silikonkautschuke mit ausschließlich Methyl-Gruppen an der Polymerkette, wie Polydimethyl-Siloxan.

MQ Silikonkautschuk Methyl-Polysiloxan.

MVQ Silikonkautschuke mit Methyl- und Vinylgruppen an der Polymerkette.

### U-Gruppe

Zur U-Gruppe gehören Kautschuke mit Kohlenstoff, Sauerstoff und Stickstoff in der Polymerkette.

AFMU Terpolymere aus Tetrafluorethylen, Trifluornitrosomethan und Nitroso-perfluorbuttersäure.

AU Polyesterurethan-Kautschuk.

EU Polyetherurethan-Kautschuke.

Ferner sind auch die in obiger Liste nicht aufgeführten NBR-Kautschuke mit endständigen Vinyl-, Carboxyl- und Amingruppen oder Ethylenvinylacetate (EVA) geeignet.

Dem Fachmann sind Möglichkeiten bekannt, die Elastizität der vorstehend genannten Polymere an die Erfordernisse der Erfindung anzupassen.

Bevorzugte Polymere sind organisch modifizierten Siliziumverbindungen der Q-Gruppe, bevorzugt Silikone wie Polydimethylsiloxan oder Polyvinylsiloxan.

Als organische Polymere können auch Polyisocyanate, Polyepoxide, Poly(meth)acrylate, Polyester oder Polyvinylchlorid verwendet werden.

Die Poly(meth)acrylate können polymerisierte Polyester-, Polyether-, Carbonat-, Epoxi- oder Urethan(meth)acrylate sein.

Die Polymerbeschichtung kann auf beliebige Weise auf die Formgedächtnislegierung aufgebracht werden, beispielsweise durch Sprühen, Rakeln, Tauchen oder Schleudern. Die Herstellung der Polymerbeschichtung kann auch Polymerisieren und/oder Härten der Beschichtung umfassen.

Es kann erforderlich sein, die Formgedächtnislegierung vorher zu behandeln, z. B. Plasmabehandlung. Ebenso kann die Beschichtung mehrere Schichten und/oder Polymere umfassen, beispielsweise um die Haftung auf der Formgedächtnislegierung zu verbessern. Es können auch anorganische Beschichtungen aufgebracht werden, z.B. dünne Metallschichten.

Die Polymerbeschichtung kann auch noch weitere Bestandteile enthalten, beispielsweise Pigmente, Nanopartikel, magnetische Partikel.

Es kann notwendig sein, dass Polymer und/oder die Oberflächenstruktur in Bezug auf die gewünschte Trockenadhäsivität der Oberfläche anzupassen, insbesondere in Bezug auf die Gegenfläche an der die Oberfläche anhaftet. Bevorzugte Gegenflächen weisen einen höheren Elastizitätsmodul als die Polymerbeschichtung auf. Dadurch ist gewährleistet, dass sich beim Ausbilden der Oberflächenstruktur eine Veränderung der zur Adhäsion zur Verfügung stehenden Oberfläche ergibt. Die Gegenfläche kann die Veränderung, die sich durch die Ausbildung der Oberflächenstruktur ergibt, nicht ausgleichen. Daher steht nach Ausbildung der Oberflächenstruktur weniger oder mehr Oberfläche der Gegenfläche in Kontakt mit der Polymerbeschichtung. Dies verändert die Adhäsion zwischen dem Gegenstand und der Gegenfläche.

Da die Stärke der Adhäsion von der Kontaktfläche zwischen Polymerschicht und Gegenfläche abhängt, kann die Gegenfläche besonders gestaltet sein, um die Kontaktfläche zur Polymerbeschichtung zu maximieren. Sie kann beispielsweise besonders strukturiert sein. Sie kann aber auch glatt sein, insbesondere, wenn die Polymerbeschichtung ebenfalls glatt ist.

Die Gegenfläche kann aus beliebigen Materialien bestehen. Es kann sich um organische oder anorganische Materialien handeln, beispielsweise Kunststoffe, Metalle, Legierungen oder oxidische Materialien wie Keramiken oder Gläser.

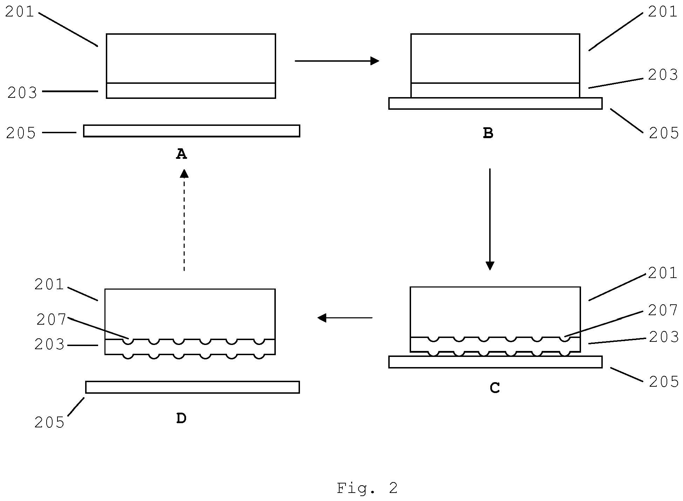

Die Formgedächtnislegierung kann eine Oberflächenstruktur ausbilden, welche die zur Adhäsion zur Verfügung stehende Fläche verändert. Dabei bildet die Formgedächtnislegierung Anhebungen oder Absenkungen aus. Dadurch wird die Oberfläche des Gegenstands an diesen Stellen angehoben oder abgesenkt. Die Anhebungen und Absenkungen werden im Falle von beschichteten Stellen auch durch die Polymerschicht weitergegeben. Da sich durch die Struktur die Oberfläche des Gegenstands verändert, steht für die Adhäsion an einer Gegenfläche eine andere Fläche zur Verfügung. Im Falle einer planaren Gegenfläche und einer planaren Oberfläche des Gegenstandes, führt die Ausbildung der Oberflächenstruktur dazu, dass weniger Fläche in Kontakt mit der Gegenfläche steht. Dies verringert entsprechend die Adhäsion zwischen dem Gegenstand und der Gegenfläche. Bevorzugt verringert die Ausbildung der Oberflächenstruktur die für die Adhäsion zur Verfügung stehende Fläche. Im Gegensatz zu den Geckostrukturen sinkt in diesem Fall die Adhäsion durch die Strukturierung der Oberfläche. Dies ist auch in Figur 2 veranschaulicht.

Es ist auch möglich, dass nur bei ausgebildeter Oberflächenstruktur die Fläche zur Adhäsion maximal ist, wenn zum Beispiel die Gegenfläche entsprechend der Oberflächenstruktur geformt ist.

Die Ausbildung der Oberflächenstruktur kann auch darin bestehen, dass eine bestehende Struktur verschwindet.

Die Oberflächenstruktur kann beliebig ausgestaltet sein. Es kann sich um Anhebungen oder Absenkungen, welche beliebig geformt sind, handeln. So kann es sich um Strukturen mit kreisförmiger, rechteckiger, linearer oder verzweigter Grundfläche handeln. Sie kann regelmäßig oder unregelmäßig auf der Oberfläche angeordnet sein. Die Erhebungen können halbkugelförmig, kegelförmig oder pyramidenförmig ausgeformt sein.

Oberflächenstruktur bedeutet, dass es nur an der Oberfläche der Formgedächtnislegierung, bzw. der ggf. darauf aufgebrachten Polymerschicht, zur Ausbildung einer Struktur kommt. Andere Bereiche des Gegenstands bleiben unbeeinflusst. Es kommt insbesondere zu keiner sonstigen makroskopischen Veränderung der Formgedächtnislegierung. Dies schließt natürlich nicht aus, dass es auf kristalliner Ebene auch innerhalb der Formgedächtnislegierung zu Veränderungen, wie z.B. Kristallumwandlungen, kommt, welche sich aber makroskopisch nicht auswirken. Es kommt insbesondere nicht zu einer Verbiegung oder Größenänderung der Formgedächtnislegierung außer der Oberflächenstruktur.

Bei der Oberflächenstruktur handelt es sich um eine Mikrostruktur. Dies bedeutet, dass die Struktur in Bezug auf ihre Ausdehnung parallel zur Oberfläche des Gegenstands mindestens eine Dimension von unter 500 µm aufweist. Dies bedeutet, dass die kleinste laterale Ausdehnung der Struktur unter 500 µm beträgt. Bevorzugt beträgt die kleinste laterale Ausdehnung der Oberflächenstruktur weniger als 300 µm, besonders bevorzugt weniger als 200 µm, ganz besonders bevorzugt weniger als 100 µm.

Die Höhe, bzw. Tiefe der ausgebildeten Oberflächenstruktur bezogen auf die Oberfläche der Formgedächtnislegierung hängt von dem verwendeten Herstellungsverfahren ab. Dabei beträgt die Höhe der ausgebildeten Oberflächenstruktur mehr als 0,5 µm, besonders bevorzugt mehr als 0,8 µm. Diese Forderung ergibt sich daraus, dass einerseits eine gewisse Polymerschichtdicke benötigt wird, um adhäsive Eigenschaften zu erzeugen, und andererseits die Strukturen nicht viel kleiner sein dürfen als die Schichtdicke, um eine Änderung der Kontaktfläche hervorzurufen.

Die Höhe der ausgebildeten Oberflächenstruktur kann durch das Herstellungsverfahren bestimmt werden.

Die Oberflächenstruktur kann aus einzelnen Strukturmerkmalen wie runden oder linearen Erhebungen bestehen. Diese sind bevorzugt mindestens 1 µm voneinander entfernt, besonders bevorzugt mindestens 30 µm.

Die Angaben beziehen sich auf die Oberfläche des Gegenstands mit der Polymerbeschichtung.

Die Ausmaße der Oberflächenstruktur können mit Rasterelektronenmikroskopie, Weißlichtinterferometrie, konfokaler Lichtmikroskopie oder AFM gemessen werden.

Die hier angegebenen Ausmaße wurden mit Weißlichtinterferometrie gemessen.

Die Dicke der Beschichtung aus mindestens einem Polymer muss an die ausgebildete Oberflächenstruktur angepasst werden. Für ein Optimum zwischen Schaltbarkeit und Adhäsion ist die Beschichtung an ihrer dicksten Stelle weniger als 15 µm dick, besonders bevorzugt weniger als 10 µm. Dadurch ist sichergestellt, dass im Falle einer Mikrostruktur, die Strukturveränderungen der Formgedächtnislegierung auch an der Oberfläche der Beschichtung festgestellt werden können. Für eine Änderung der Absolutwerte der Adhäsion kann die Schichtdicke variiert werden.

Die optimale Schichtdicke hängt auch von der maximalen Höhe, bzw. Tiefe der ausgebildeten Oberflächenstruktur ab. Bevorzugt beträgt das Verhältnis zwischen Dicke der Polymerbeschichtung und der maximalen Höhe, bzw. Tiefe der Oberflächenstruktur weniger als 50:1, besonders bevorzugt weniger als 30:1, ganz besonders bevorzugt weniger als 10:1.

Die Formgedächtnislegierung kann die Oberflächenstruktur reversibel oder irreversibel ausbilden. Dies hängt von der Art der Vorbehandlung der Formgedächtnislegierung ab. Bevorzugt kann die Formgedächtnislegierung die Oberflächenstruktur reversibel ausbilden. Dadurch kann die Adhäsion der Oberfläche reversibel geschaltet werden.

Die Ausbildung der Oberflächenstruktur wird bevorzugt thermisch ausgelöst. Dabei weist die Formgedächtnislegierung bei einer ersten Temperatur eine erste Struktur auf und bei einer zweiten Temperatur eine zweite Struktur. Beide Strukturen können über die entsprechende Temperatur ineinander überführt werden. Dies kann reversibel oder irreversibel geschehen, bevorzugt reversibel.

Bevorzugt liegt die erste Temperatur unterhalb von M_{f} und die zweite Temperatur oberhalb von A_{f}. Jedoch unterhalb der Ausheilungstemperatur des reversiblen Formgedächtniseffektes. Damit ist eine vollständige Umwandlung der Formgedächtnislegierung gewährleistet.

Für die zur Umwandlung benötigte Temperatur kann der Gegenstand auf diese Temperatur erwärmt oder abgekühlt werden. Dabei kann der Gegenstand selbst auch Mittel zum Abkühlen oder Erwärmen enthalten. Dies können Heizvorrichtungen sein, aber auch erwärmbare Komponenten, z.B. durch Induktion erwärmbare Schichten oder Partikel, welche zum Beispiel ferromagnetisch sind.

In einer Weiterbildung der Erfindung ist die erste Struktur der Formgedächtnislegierung eine planare Struktur. Bevorzugt wird die Oberflächenstruktur durch Anhebungen und/oder Absenkungen gebildet. Diese stellen die zweite Struktur dar.

Die Oberfläche der Formgedächtnislegierung ist mindestens teilweise mit mindestens einem Polymer beschichtet. Bevorzugt ist mindestens der Bereich, der die Oberflächenstruktur ausbildet beschichtet.

In einer weiteren Ausführungsform der Erfindung ist die Oberfläche vollständig mit dem Polymer beschichtet.

Die Oberflächenstruktur kann auf verschiedene Weise erhalten werden. Bevorzugt wird die Oberflächenstruktur durch plastische Deformationen wie Prägen oder Kratzen der Oberfläche der Formgedächtnislegierung im martensitischen Zustand erhalten, besonders bevorzugt jedoch durch Indentieren. Nach einer Planarisierung der zuvor plastisch defomierten Oberfläche kommt es beim Erhitzen zur Ausbildung von Strukturen an den vorher deformierten Stellen. Diese Strukturen bilden sich beim Abkühlen wieder zurück. Die Form der Strukturen kann durch die Art der plastischen Deformation gesteuert werden. So können kegelförmige, pyramidenförmige oder sphärische Indenter verwendet werden. Dies führt zu einzelnen Erhebungen, welche in ihrer Form der ursprünglichen Indenterform ähneln. Längliche Kratzer in der Oberfläche führen zu länglichen Erhebungen als Oberflächenstruktur. Entsprechend können auch komplexere Muster in die Oberfläche eingeprägt werden. Vollständig reversible Oberflächenstrukturen können mit sphärischen Indentern erhalten werden.

Die Strukturen können auch durch Laser Schock Indentierung (engl. Laser Shock Indentation) erhalten werden.

Die Erfindung betrifft auch die Verwendung des erfindungsgemäßen Gegenstands zur Herstellung einer lösbaren trockenadhäsiven Verbindung.

Der erfindungsgemäße Gegenstand kann in vielen Bereichen verwendet werden. Er kann auch Teil eines größeren Gegenstands sein. Solch eine kontrollierbare Adhäsion ist für alle Verbindungen wichtig, welche bei bestimmten Bedingungen gelöst werden müssen. Dies können beispielsweise Bauteile sein, welche sich bei bestimmten Temperaturen lösen sollen. Es können auch schaltbare Greifer sein.

Der Gegenstand der Erfindung kann aber auch in anderen Bereichen verwendet werden, wo schaltbare Oberflächen, unabhängig von ihrer Adhäsionskraft, von Bedeutung sind. Dies können beispielsweise auch medizinische Anwendungen sein. Dies kann auch die Anwachsfähigkeit von Zellen oder Geweben beinhalten.

Die schaltbaren Oberflächen können auch in tribologischen Anwendungen eine Rolle spielen. So ändert sich die Reibung der Oberfläche in Abhängigkeit von der Oberflächenstruktur. Auf diese Weise kann der erfindungsgemäße Gegenstand zum Beispiel durch Reibungswärme erhitzt eine Oberflächenstruktur ausbilden.

Weitere Einzelheiten und Merkmale ergeben sich aus der nachfolgenden Beschreibung von bevorzugten

Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine DSC-Messung (Dynamische Differenzkalorimetrie; Differential Scanning Calorimetry) der Phasenumwandlung einer NiTi-Legierung;
- Fig. 2: Schematische Darstellung der Verwendung einer Oberfläche mit schaltbarer Adhäsion;
- Fig. 3: Beispiele für Oberflächenstrukturen;
- Fig. 4: Veränderung der Adhäsionskraft in Abhängigkeit von der Temperatur für reines PDMS (jeweils linke Säule) und mit PDMS beschichtetes NiTi (6-8 µm Dicke; jeweils rechte Säule);
- Fig. 5: Veränderung der Adhäsion für eine Probe mit einzelnen Erhebungen als Oberflächenstruktur;
- Fig. 6: Veränderung der Adhäsion für zwei Proben mit einzelnen Erhebung im Abstand von 450 µm (Probe 40; jeweils rechte Säule) und 750 µm (Probe 50; jeweils linke Säule);
- Fig. 7: Veränderung der Adhäsion für eine Probe mit einzelnen Erhebungen (Probe 20; jeweils linke Säule) und Linien (Probe 60; jeweils rechte Säule);
- Fig. 8: Lichtmikroskopische Aufnahmen verschiedener Proben aus Figur 9 im kalten (a, c) und bei 84 °C (b, d).

Figur 1 zeigt die Umwandlungscharakteristik für eine NiTi-Legierung mit 50,3 at % Nickel anhand einer Differential-Kalorimetrischen-Analyse. Aus dem Diagramm lassen sich die Start- und Endtemperaturen für die jeweilige Umwandlung ablesen. Beim Aufheizen beginnt die Umwandlung in Austenit bei ca. 54 °C (Aₛ) und endet bei ca. 76 °C (A_{f}). Beim Abkühlen beginnt die Umwandlung in Martensit bei ca. 40 °C (Mₛ) und endet bei ca. 25 °C (M_{f}).

In Figur 2 ist ein schematischer Ablauf der Verwendung einer Oberfläche mit schaltbarer Adhäsion gezeigt. In dem in der Abbildung gezeigten Fall ist die Oberfläche der Formgedächtnislegierung (201) vollständig mit einer Polymerschicht (203) beschichtet. In der in Schritt A gezeigten ersten Struktur der Formgedächtnislegierung liegt eine planare Oberfläche vor. Der Gegenstand wird mit der Oberfläche auf eine Gegenfläche (205) aufgebracht und es kommt zu einer Adhäsion zwischen der Gegenfläche (205) und der Polymerschicht (203) (Schritt B). Da beide Oberflächen planar sind, ist die Fläche, die für die Adhäsion zur Verfügung steht maximal. Jetzt wird die Formgedächtnislegierung in die zweite Form überführt (Schritt C). Dies geschieht üblicherweise durch Erwärmen auf eine Temperatur oberhalb der Umwandlungstemperatur der Formgedächtnislegierung. Es kommt zur Ausbildung der Oberflächenstruktur (207) der Formgedächtnislegierung. Die Polymerschicht (203) auf der Formgedächtnislegierung wird durch die Ausbildung der Oberflächenstruktur (207) ebenfalls strukturiert.. Die Oberflächenstruktur ist im gezeigten Beispiel die Ausbildung von Anhebungen. Dadurch ist die Oberfläche des Gegenstands nicht mehr planar und die zur Adhäsion mit dem Prüfkörper bzw. der Testoberfläche (205) zur Verfügung stehende Fläche ist geringer. Dies ist insbesondere der Fall, wenn die Gegenfläche (205) die Veränderung der Oberfläche nicht ausgleichen kann, da es zu steif ist. Durch die geringere Fläche nimmt die Adhäsion zwischen dem Prüfkörper (205) und dem Gegenstand ab. Der Gegenstand kann mit geringerer Kraft von der Gegenfläche (205) gelöst werden (Schritt D). Wenn die Formgedächtnislegierung wieder in die erste Form überführt werden kann, wird die ursprüngliche Adhäsionskraft wieder erreicht. Somit kann die Adhäsivität dieser Oberfläche mittels eines thermischen Stimulus kontrolliert werden.

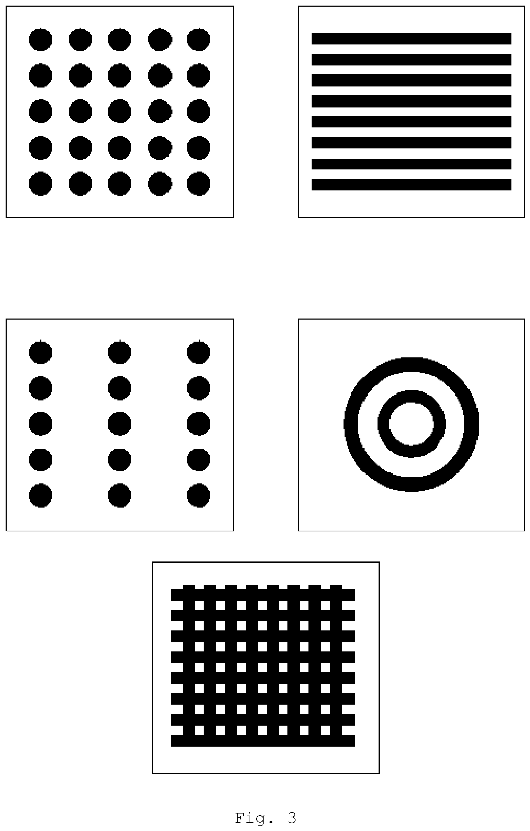

Figur 3 zeigt Beispiele für Oberflächenstrukturen. Die schwarzen Bereiche sind Bereiche, welche Anhebungen oder Absenkungen ausbilden können. Die Oberflächenstruktur besteht bevorzugt aus einer Vielzahl von Strukturelementen. Dadurch kann eine größere Veränderung der Kontaktfläche erreicht werden. Der optimale Abstand der einzelnen Strukturen hängt von der Polymerbeschichtung und der Gegenfläche ab.

Die Proben einer NiTi-Legierung (Memry, Bethel, Connecticut, Tabelle 1) wurden auf eine Größe von 3x7 mm zugeschnitten. Zur Beseitigung der mechanischen Verformungsschicht, erfolgte eine elektrochemische Politur der Probenoberfläche. Nach dem Polieren wurde die Proben in flüssigem Stickstoff abgekühlt (-196°C), um das Vorliegen einer vollständig martensitischen Phase sicherzustellen.

Für die Erzeugung der thermisch schaltbaren Oberflächenstrukturen wurden mittels eines Indenters Eindrücke in die Oberfläche gebracht. Hierzu wurde ein Prüfkörper mit einer kugelförmigen Geometrie (Rubin; 300 µm Durchmesser) und einer Kraft von 10 N gewählt. Die Eindrücke wurden in einer 32x65 Matrix in die Oberfläche eingebracht (Härteprüfer Typ V-100_C1, Leco Instrumente, Mönchengladbach mit Vickers Indenter aus Diamant, Ahotec, Remscheid, Deutschland). Der Abstand zwischen zwei Mittelpunkten der Eindrücke lag dabei bei 200 µm.

Linienförmige Oberflächenstrukturen wurden mittels Kratzens in die Oberfläche eingebracht. Hierzu wurden die Kratzer mit einer konstanten Kraft von 2 N in einem Linienabstand von 60 µm in die Oberfläche eingebracht (Mikro-Scratch-Tester; CSEM DT 322-01). Dafür wurde eine konisch zulaufende Indenterspitze mit einem Spitzenradius von 5 µm und einem Öffnungswinkel von 90° verwendet.

Um eine planare Ausgangsoberfläche zu erhalten wurden die Verformungen im Anschluss planarisiert. Hierzu wurden die Proben bis zum Grund der Eindrücke bzw. Kratzer abgeschliffen. Auf die planarisierte NiTi-Oberfläche wurde Polydimethylsiloxan (Sylgard 184, Dow Corning) im Verhältnis 10:1 von Basis zu Vernetzer mit einer Lackierzentrifuge aufgebracht. Dafür wurde zunächst das PDMS über den NiTi Block gegossen und für 800 s bzw. 200s bei 5000 Umdrehungen/min geschleudert. Beide Zeiten ergaben ähnliche Beschichtungen. Anschließend wurde die beschichtete Probe für 48 Stunden bei 40°C im Ofen getrocknet und die aufgebrachte Schichtdicke mittels Weißlichtinterferometrie bestimmt.

Zusätzlich wurden noch Proben hergestellt, bei denen die Struktur mit einem Vickers Indenter (10 N; 32x65) hergestellt wurden, sowie eine andere Zeit zum Schleudern verwendet wurde. Eine Übersicht zeigt Tabelle 2. Im Falle des Vickers Indenters wurden die Proben bei - 50 °C indentiert.

Das Adhäsionsverhalten der Formgedächtnislegierung mit der PDMS Schicht wurde charakterisiert. Dabei wurde das Ablöseverhalten der Polymeroberfläche von einem Glasprüfkörper untersucht und die dabei auftretenden Haftkräfte gemessen.

Für die Adhäsionsmessung wurden die NiTi/PDMS-Proben auf einen Heiztisch aufgebracht und mit einem Glasprüfkörper in Kontakt gebracht. Ist eine bestimmte Vorladekraft erreicht, werden Probe und Prüfkörper wieder von einander getrennt. Die dabei auftretenden Kräfte werden gemessen. Für die Kraftmessung wurde der Glasprüfkörper an eine Glasfeder mit bekannter Federkonstante geklebt und deren Auslenkung interferometrisch bestimmt. Als Prüfkörper wurden eine planare Glasfläche mit einer Fläche von 2 mm² und eine Glaskugel mit einem Durchmesser von 4 mm verwendet. Für die Vergleichbarkeit der Messergebnisse wurde der Einflussfaktor der Kontaktfläche herausgerechnet.

Die Messungen wurden bei verschiedenen Temperaturen durchgeführt. Die Temperatur wurde mittels spannungsgesteuertem Heizelements, dass sich unter der NiTi Probe befand, gesteuert. Durch den Aufbau des Heiztisches gibt es ein Offset von Heizelement zur Probe von etwa 20°C. Die Messungen wurden jeweils 15 Mal wiederholt. Um zu zeigen, dass die Adhäsionskraft nach einem deutlichen Abfall beim Aufheizen wieder auf das Anfangsmaß zurückgeht, wurde die Probe nach dem Abkühlen nochmals vermessen.

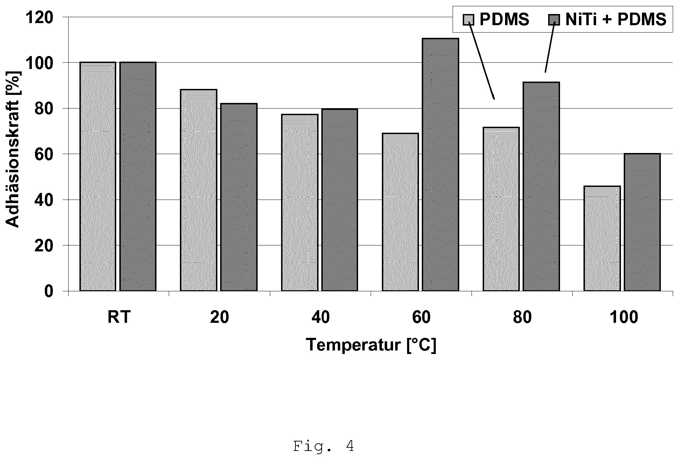

Da sich bei dieser Messung die Temperatur und die Ausbildung der Strukturen ändern, wurde nachfolgend noch der Einfluss der Temperaturänderung auf die Materialeigenschaften analysiert. Hierzu wurde eine weitere Adhäsionsmessung mit einer reinen PDMS-Probe und einer unbehandelten NiTi/PDMS-Probe mit nahezu identischer Schichtdicke wie die der NiTi/PDMS-Probe mit reversibler Oberflächenstrukturierung unternommen. Für beide Proben wurde beim Aufheizen von Raumtemperatur (RT) auf 100 °C mit einer Schrittweite von 20 °C für jeweils 15 Messzyklen die Adhäsionskraft gemessen (Figur 4). Es konnte eine langsame Abnahme der Adhäsionskraft mit steigender Temperatur festgestellt werden.

Bei einer Probe ohne Polymerschicht aber mit reversibler Oberflächenstrukturierung konnte keine Veränderung der Adhäsion gemessen werden.

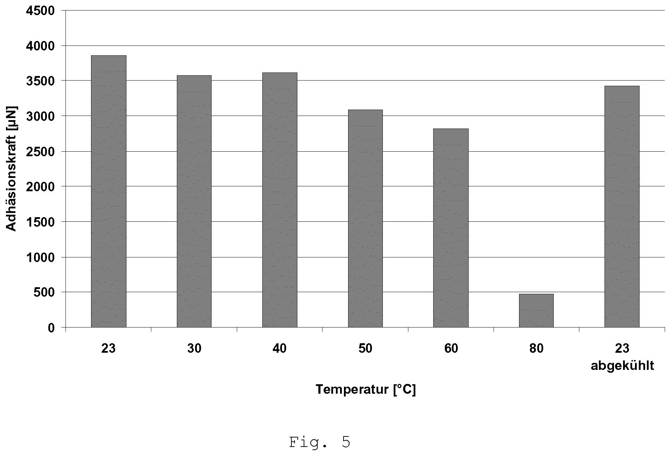

Figur 5 zeigt die Messung der temperaturabhängigen Adhäsion für eine Probe mit einzelnen Erhebungen (Probe 30). Bis 70 °C nimmt die Adhäsion nur um ca. 27 % ab. Bei 80 °C sinkt die Adhäsionskraft von 2700 µN auf 400 µN (85 % Abnahme). Bei erneutem Abkühlen stellt sich die ursprüngliche Adhäsionskraft fast vollständig wieder her (3700 µN).

Bei Vergleichsproben mit einer Schichtdicke von 33 µm PDMS konnte keine so deutliche Abnahme der Adhäsionskraft festgestellt werden. Bei dieser Schichtdicke an PDMS scheint die Oberflächenstruktur der Formgedächtnislegierung nicht mehr an die Oberfläche des Gegenstands übermittelt zu werden.

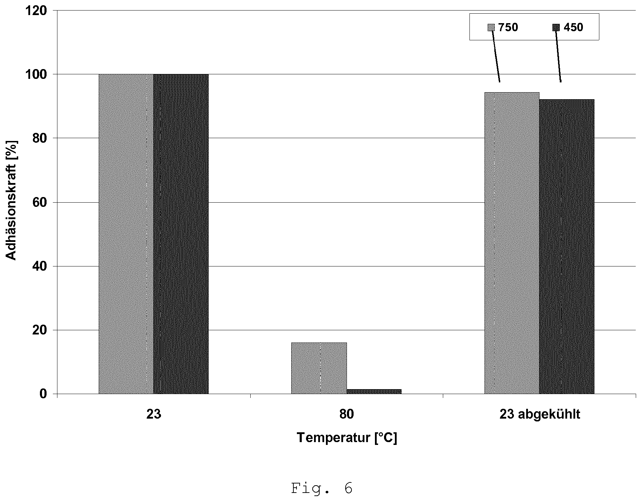

Figur 6 zeigt den Einfluss des Abstands der Erhebungen. Dabei zeigt sich eine Abhängigkeit der Abnahme der Adhäsionskraft vom Abstand der Erhebungen. So nimmt die Adhäsionskraft bei 450 µm Abstand stärker ab, als bei einem größeren Abstand und auch als bei einem kleineren Abstand von 200 µm. Um einen Einfluss der Erhebung zu messen, müssen mindestens eine Erhebung in Kontakt mit dem Prüfkörper gelangen. Passt der Prüfkörper aufgrund seiner Geometrie zwischen benachbarte Strukturen, dann ist der Einfluss der Erhebungen auf die Adhäsion gering.

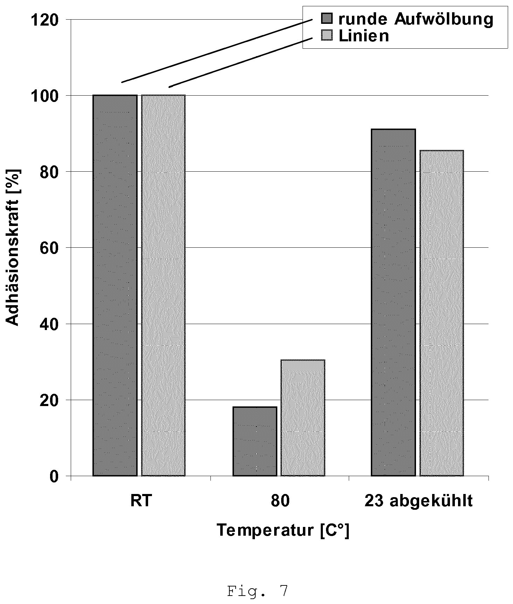

Figur 7 zeigt die Abnahme der Adhäsion im Vergleich von einzelnen Erhebungen im Abstand von 200 µm und Linien im Abstand von 200 µm.

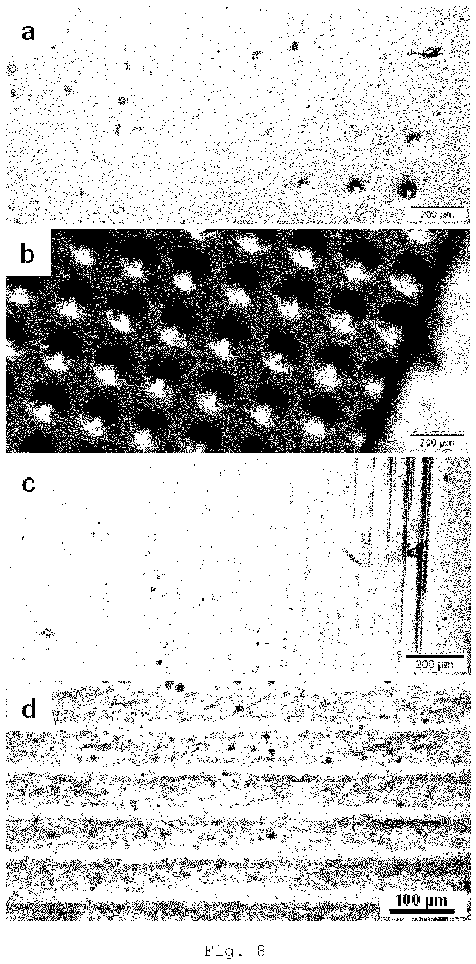

Figur 8 zeigt lichtmikroskopische Aufnahmen der Oberflächenstrukturen mit kreisförmigen und linienförmige Erhebungen bei Raumtemperatur (a, c) und bei 84 °C (b, d). Die Ausbildung der Oberflächenstruktur durch die PDMS-Beschichtung hindurch ist deutlich zu erkennen. Im Falle der Linien wird ein linienförmiges Muster erhalten mit einer Höhendifferenz von 0,9 (+/- 0,15) µm. Die Abnahme der Adhäsion beträgt 74 % von 7,63 (+/- 0,15) mN auf 2,33 (+/- 0,13) mN. Die Adhäsion kann nach dem Abkühlen auf 83 % wiederhergestellt werden.

**Tabelle 1**

| Element | Probengewicht [mg] | Verdünnung | Arithmetisches Mittel [mg/l] | Konzentration [Gew. %] |
|---|---|---|---|---|
| Ni | 39, 790 | 1:100 | 4,415 +/- 0,053 | 55,479 +/- 0,669 |
| Ti | | | 3,367 +/- 0,051 | 42,310 +/- 0,645 |

**Tabelle 2**

| Probe | Muster | Indenter / Kraft | Abstand | Schleudern in Sekunden |
|---|---|---|---|---|
| 20 | Einzelne Erhebungen 32x65 Matrix | Sphärisch 300 µm / 10 N | 200 µm | 800 s |
| 30 | Einzelne Erhebungen 32x65 Matrix | Vickers / 10 N | 200 µm | 200 s |
| 40 | Einzelne Erhebungen 15x15 Matrix | Vickers / 10 N | 450 µm | 200 s |
| 50 | Einzelne Erhebungen 15x15 Matrix | Vickers / 10 N | 750 µm | 200 s |
| 60 | Linien | 2000 mN | 60 µm | 200 s |

### Bezugszeichen

- 201: Formgedächtnislegierung
- 203: Polymerschicht
- 205: Gegenfläche
- 207: Oberflächenstruktur

## Patentansprüche

1. Gegenstand mit mindestens einer Oberfläche mit schaltbarer Trockenadhäsion, wobei diese Oberfläche mindestens eine Formgedächtnislegierung umfasst, welche mindestens teilweise mit mindestens einem Elastomer beschichtet ist, **dadurch gekennzeichnet, dass** die mindestens eine Formgedächtnislegierung eine Oberflächenstruktur ausbilden kann, welche die zur Trockenadhäsion verfügbare Fläche der Oberfläche verändert, wobei die Oberflächenstruktur durch Anhebungen oder Absenkungen gebildet wird, **dadurch gekennzeichnet, dass** die reversible Oberflächenstruktur eine Mikrostruktur ist, welche in Bezug auf ihre Ausdehnung parallel zur Oberfläche des Gegenstands mindestens eine Dimension von unter 500 µm aufweist, und eine Oberflächenstruktur mit einer Höhe von mehr als 0,5 µm ausgebildet wird, und die Beschichtung aus mindestens einem Elastomer an ihrer dicksten Stelle eine Dicke von unter 15 µm aufweist, und die Formgedächtnislegierung eine Nickel-Titan-Formgedächtnislegierung ist.

2. Gegenstand nach Anspruch 1, **dadurch gekennzeichnet, dass** die ausgebildete Oberflächenstruktur die zur Adhäsion verfügbare Fläche der Oberfläche verringert.

3. Gegenstand nach einem der Ansprüche 1 bis 2, **dadurch gekennzeichnet, dass** die Formgedächtnislegierung bei einer ersten Temperatur eine erste Struktur aufweist und bei einer zweiten Temperatur die Oberflächenstruktur ausbildet.

4. Gegenstand nach Anspruch 3, **dadurch gekennzeichnet, dass** die erste Struktur der Oberfläche eine planare Struktur ist.

5. Gegenstand nach einem der Ansprüche 1 bis 4, **dadurch gekennzeichnet, dass** die Oberfläche vollständig mit dem Elastomer beschichtet ist.

6. Verwendung eines Gegenstands nach einem der Ansprüche 1 bis 5 zur Herstellung einer lösbaren trockenadhäsiven Verbindung.

## Claims

1. An article having at least one surface having switchable adhesion, wherein this surface comprises at least one shape memory alloy coated at least partly with at least one Elastomer, **characterized in that** the at least one shape memory alloy is capable of forming a surface structure changing the surface area available for dry-adhesion, wherein the surface structure is formed by elevations and/or depressions, wherein the reversible surface structure is a microstructure, which has at least one dimension of below 500 µm parallel to the surface of the article, and the height of the surface structure formed is more than 0.5 µm, and the coating of at least one Elastomer at its thickest place is preferably less than 15 µm in thickness, and the shape memory alloy is a nickel-titanium shape memory alloy.

2. The article as claimed in claim 1, **characterized in that** the surface structure formed reduces the surface area available for adhesion.

3. The article as claimed in any of claims 1 to 2, **characterized in that** the shape memory alloy has a first structure at a first temperature and forms the surface structure at a second temperature.

4. The article as claimed in claim 3, **characterized in that** the first structure of the surface is a planar structure.

5. The article as claimed in any of claims 1 to 4, **characterized in that** the surface is completely coated with the Elastomer.

6. Use of an article as claimed in any of claims 1 to 5 to produce a separable dry-adhesive bond.

## Revendications

1. Objet ayant au moins une surface présentant une adhérence sèche commutable, cette surface comprenant au moins un alliage à mémoire de forme, qui au moins partiellement est revêtu d'au moins un élastomère, **caractérisé en ce que** l'au moins un alliage à mémoire de forme peut constituer une structure superficielle qui modifie l'aire de la surface disponible à l'adhérence sèche, la structure superficielle étant formée par des protubérances ou des renfoncements, **caractérisé en ce que** la structure superficielle réversible est une microstructure, qui présente, par référence à son extension parallèlement à la surface de l'objet, au moins une dimension inférieure à 500 µm, et **en ce qu'**une structure superficielle ayant une hauteur supérieure à 0,5 µm est constituée, et le revêtement en au moins un élastomère présentant en son point le plus épais une épaisseur inférieure à 15 µm, et l'alliage à mémoire de forme étant un alliage à mémoire de forme nickel-titane.

2. Objet selon la revendication 1, **caractérisé en ce que** la structure superficielle constituée diminue l'aire de la surface disponible à l'adhérence.

3. Objet selon l'une des revendications 1 à 2, **caractérisé en ce que** l'alliage à mémoire de forme présente à une première température une première structure, et constitue à une seconde température la structure superficielle.

4. Objet selon la revendication 3, **caractérisé en ce que** la première structure de la surface est une structure plane.

5. Objet selon l'une des revendications 1 à 4, **caractérisé en ce que** la surface est entièrement revêtue de l'élastomère.

6. Utilisation d'un objet selon l'une des revendications 1 à 5 pour fabriquer un assemblage adhésif sec détachable.
